## Europäisches Patentamt
## European Patent Office
## Office européen des brevets

(19)

(11) Numéro de publication: **0 006 936**
**B1**

(12) **FASCICULE DE BREVET EUROPEEN**

(45) Date de publication du fascicule du brevet: **14.04.82**

(21) Numéro de dépôt: **78900184.9**

(22) Date de dépôt: **02.10.78**

(86) Numéro de dépôt international:
**PCT/JP78/00003**

(87) Numéro de publication internationale:
**WO 79/00243 03.05.79 Gazette 79/9**

(51) Int. Cl.³: **F 02 B 61/02,**
**F 02 B 67/04, B 62 M 7/00,**
**B 62 M 9/00**

(54) **Véhicule motorisé à deux roues.**

(30) Priorité: **25.10.77 JP 143214/77**
**29.10.77 JP 129232/77**

(43) Date de publication de la demande:
**23.01.80 Bulletin 80/2**

(45) Mention de la délivrance du brevet:
**14.04.82 Bulletin 82/15**

(84) Etats contractants désignés:
**FR**

(56) Documents cités:
**DE - A - 1 751 672**
**DE - A - 2 201 371**
**GB - A - 567 646**
**GB - A - 568 799**
**GB - A - 1 210 246**
**JP - A - 49 - 44442**
**JP - A - 51 - 31420**
**JP - B1 - 48 - 38642**
**JP - B1 - 29 - 8378**
**JP - Y1 - 47 - 6496**
**US - A - 3 227 236**
**US - A - 3 613 645**
**US - A - 3 951 123**

(73) Titulaire: **HONDA GIKEN KOGYO KABUSHIKI**
**KAISHA**
**27-8, Jingumae, 6-chome**
**Shibuya-ku, Tokyo 150 (JP)**

(72) Inventeur: **TSUBOI, Masaharu**
**1024/22, Kamiyasumatsu**
**Tokorozawa-shi, Saitama 359 (JP)**

(74) Mandataire: **Lemonnier, André**
**4 Boulevard Saint Denis**
**F-75010 Paris (FR)**

Courier Press, Leamington Spa, England.

Véhicule motorisé à deux roues

La présente invention concerne un véhicule motorisé à deux roues tel qu'une motocyclette ou similaire principalement du type comportant un moteur à combustion interne multi-cylindrique tel qu'un moteur à quatre cylindres, six cylindres ou similaire.

On connaissait jusqu'ici dans ce type de véhicule à deux roues, un type dans lequel le bâti du véhicule ou cadre muni d'une roue avant et d'une roue arrière porte un moteur à combustion interne placé à l'avant et une transmission placée à l'arrière de manière que la puissance en sortie du moteur puisse être transmise par la transmission de la roue arrière. Il a été usuel dans ce cas que le vilebrequin à la partie inférieure du moteur soit muni sur ses parties d'extrémité droite et gauche d'une génératrice de courant alternatif et d'un organe de commande pour le circuit d'allumage, par exemple un générateur d'impulsions ou un dispositif rupteur. Cependant, cette disposition présente l'inconvénient exposé ci-après, plus spécialement lorsque le moteur est du type multi-cylindrique, une pluralité du cylindres, par exemple six cylindres sensiblement verticaux étant disposés transversalement.

A savoir, dans ce cas, on se heurte à l'inconvénient que le vilebrequin occupe par lui-même une longueur transversale comparativement importante et la génératrice de courant alternatif et l'organe de commande mentionnés ci-dessus qui sont montés sur ses parties d'extrémité, contribuent à accroître encore plus sa longueur de sorte que le véhicule à deux roues présente un accroissement local marqué de sa largeur et son aspect tend à être endommagé.

Le document JP-A-4 944 442 décrit un moteur de type "Wankel" ayant un arbre, un arbre de transmission intermédiaire monté transversalement entre l'arbre et un arbre d'entrée s'étendant transversalement dans la partie frontale de la transmission de manière que la rotation de l'arbre puisse être transmise par l'arbre intermédiaire à l'arbre d'entrée.

La présente invention a pour but de réaliser un véhicule motorisé à deux roues qui ne présente pas l'inconvénient ci-dessus et dans lequel le cadre muni d'une roue avant et d'une roue arrière porte un moteur à combustion interne placé à l'avant et une transmission placée à l'arrière de manière que la puissance en sortie du moteur puisse être transmise à la roue arrière par l'intermédiaire de la transmission, un arbre de transmission intermédiaire étant monté transversalement entre l'arbre du moteur s'étendant transversalement au moteur et un arbre d'entrée s'étendant transversalement dans la partie frontale de la transmission de manière que la rotation de l'arbre puisse être transmise par l'arbre de transmission intermédiaire à l'arbre d'entrée, l'invention étant caractérisée par le fait que l'arbre du moteur est un vilebrequin, la génératrice de courant alternatif et le dispositif de commande pour le circuit d'allumage étant montés sur les deux parties d'extrémités de l'arbre de transmission intermédiaire lequel a une longueur comparativement réduite de sorte que la longueur totale de l'ensemble y compris la génératrice de courant alternatif et le dispositif de commande pour le circuit d'allumage puissant se trouver logés dans la longueur totale du vilebrequin, l'arbre de transmission étant en engagement par une roue dentée se trouvant dans sa partie centrale avec une roue dentée montée sur la partie milieu du vilebrequin par l'intermédiaire d'une chaîne et étant en engrènement par un pignon monté sur sa partie d'extrémité avec un pignon d'entrée monté sur la partie d'extrémité de l'arbre d'entrée de la transmission.

Ainsi, conformément à la présente invention, la génératrice de courant alternatif et le dispositif de commande du circuit d'allumage sont disposés sur les deux parties d'extrémité de cet arbre moteur intermédiaire de sorte que la présente invention assure l'effet avantageux que l'inconvénient précédent résultant de la dispositif conventionnelle dans laquelle la génératrice de courant alternatif et le dispositif de commande sont montés sur les deux parties d'extrémité du vilebrequin, peut être éliminé et plus spécialement que dans le cas où l'invention est appliquée à un moteur multi-cylindrique dans lequel, en conséquence, le vilebrequin occupe une grande longueur transversale, on peut obtenir un véhicule dans lequel l'ensemble présente une largeur comparativement réduite et un aspect extérieur excellent.

Dans ce cas, il est souhaitable que la génératrice de courant, alternatif et le dispositif de commande pour le circuit d'allumage mentionnés ci-dessus, qui sont des parties électriques, soient placés dans des positions comparativement élevées ensemble avec le démarreur du moteur qui est également une partie électrique de manière que ceux-ci soient protégés contre les projections d'eau de pluie ou similaire depuis la surface du sol.

La présente invention a comme autre but de réaliser un véhicule motorisé à deux roues qui satisfait à cette condition et il est caractérisé en ce que, dans la disposition précédente, l'arbre moteur est monté de manière à être positionné plus haut que le vilebrequin et il est prévu de monter à l'arrière de l'arbre moteur intermédiaire et sensiblement au même niveau, un démarreur connecté à une couronne de démarreur montée sur l'arbre moteur intermédiaire.

Conformément à la présente invention, l'arbre moteur intermédiaire entre le vilebrequin et l'arbre d'entrée de la transmission est positionné plus haut que le vilebrequin de sorte que les parties électriques montées à ses deux parties d'extrémité, à savoir la génératrice de courant alternatif et le dispositif de commande pour le circuit d'allumage, peuvent se trouver à un niveau élevé au-dessus de la surface du sol et peuvent ainsi être protégées efficacement contre les projections d'eau de pluie ou similaire depuis la surface du sol et, de plus, le démarreur, qui est une autre partie électrique, peut également être positionné sensiblement au même niveau au-dessus de la surface du sol et peut ainsi également être protégé contre l'eau de pluie et similaire, ce qui permet de réduire d'une façon notable les pannes de ces parties électriques et l'aspect d'ensemble peut être bon.

On décrira ci-après un mode de réalisation de la présente invention avec référence aux dessins ci-annexés dans lesquels:

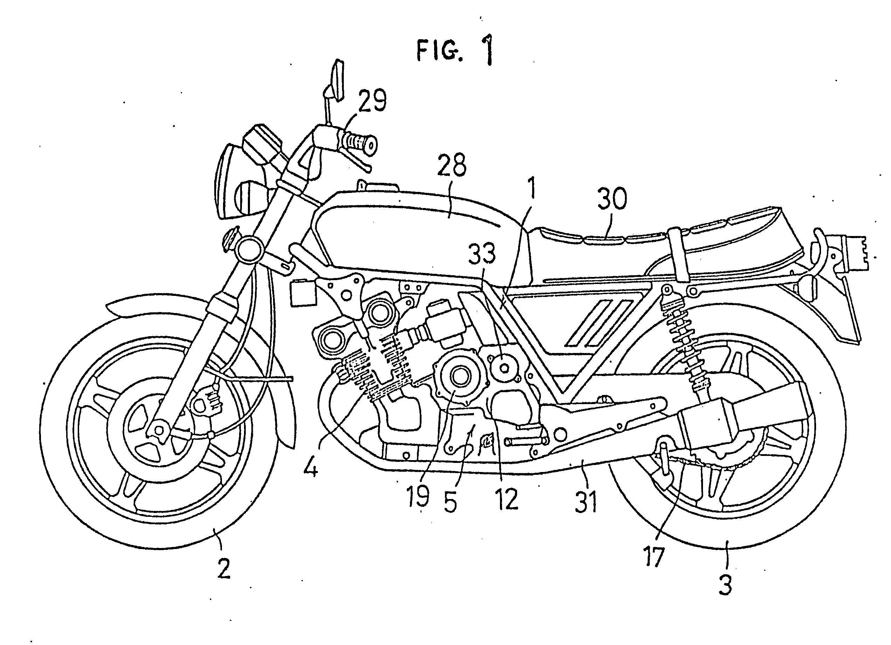

La figure 1 est une vue en élévation latérale d'un exemple d'un véhicule à deux roues conforme à la présente invention;

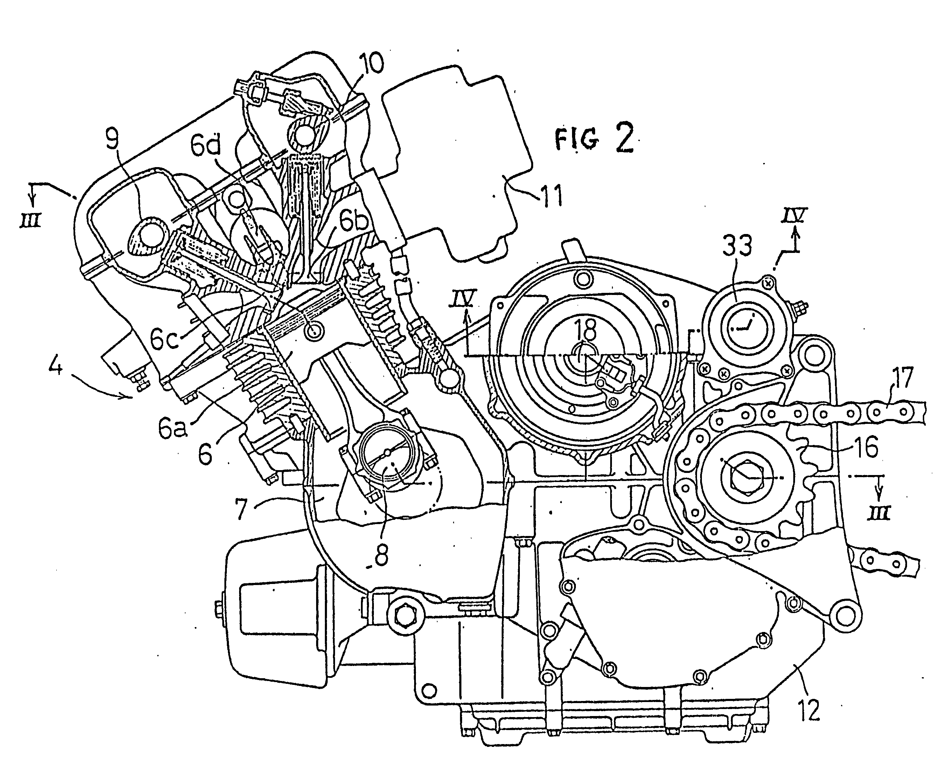

La figure 2 est une vue latérale agrandie, partie en coupe, d'une partie importante du véhicule de figure 1; et,

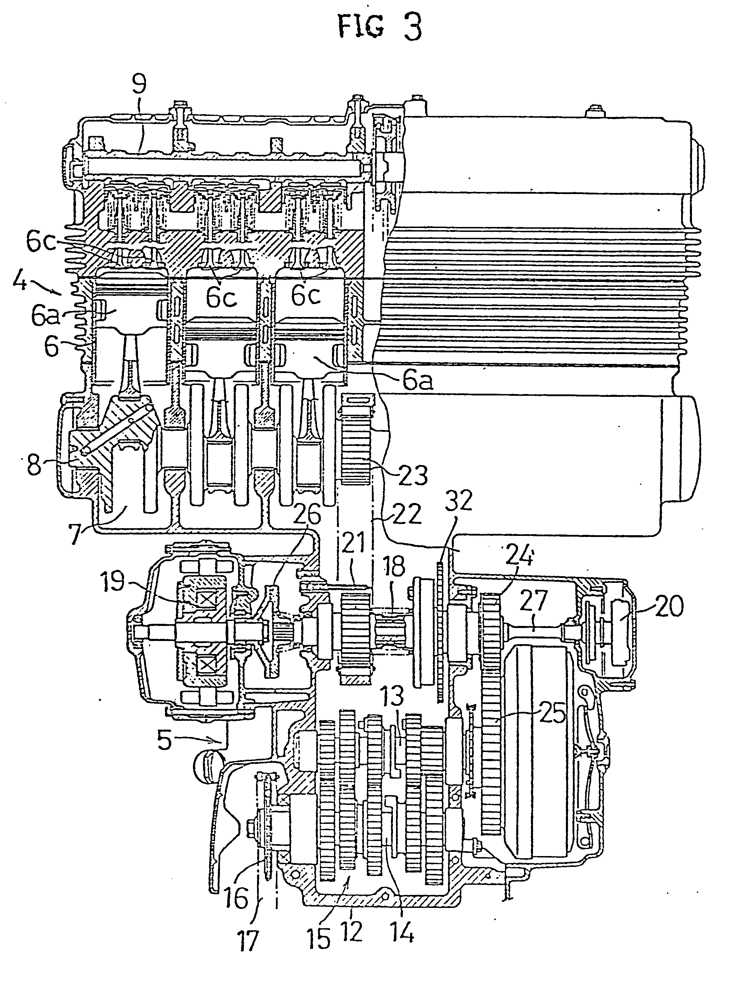

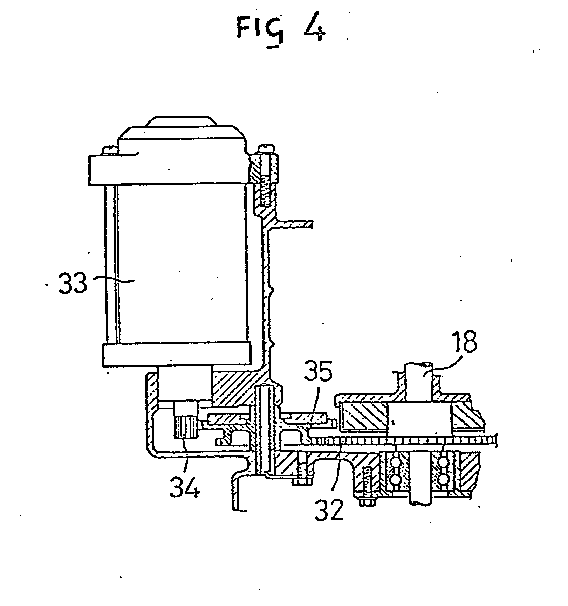

Les figures 3 et 4 sont des vues en coupe par III—III et IV—IV de Figure 2.

Se référant aux dessins, la référence 1 désigne le cadre d'une motocyclette et les références 2 et 3 désignent la roue avant et la roue arrière de celle-ci et le cadre 1 du véhicule est muni, à sa partie avant, d'un moteur à combustion interne 4, et, à sa partie arrière, d'une transmission 5 de sorte que la puissance en sortie du moteur 4 peut être transmise par la transmission 5 à la roue arrière 3.

Le moteur 4 est réalisé sous forme d'un moteur à six cylindres dont les six cylindres 6, chacun s'étendant sensiblement verticalement, sont disposés transversalement et le vilebrequin 8 du moteur s'étend transversalement dans le carter moteur 7 à la partie inférieure du moteur.

Se référant aux dessins, les références 9 et 10 désignent une paire d'arbres à came de commande des soupapes avant et arrière disposés à la partie supérieure du moteur et la référence 11 désigne un carburateur monté sur le côté arrière, six carburateurs 11 étant disposés transversalement.

Chaque cylindre 6 comporte, de la manière connue, un piston 6a et à sa partie supérieure une paire de soupapes d'admission 6b, 6b et une paire de soupapes d'échappement 6c, 6c. En se référant aux dessins, la référence 6d désigne la bougie d'allumage.

La transmission 5 comporte un arbre d'entrée 13 sur son côté frontal et un arbre de sortie 14 sur son côté arrière lesquels sont montés en parallèle dans un carter de boîte 12 entourant l'ensemble et elle est du type dans lequel les deux arbres 13, 14 sont interconnectés par une pluralité de trains d'engrenages sélectionnables 15, l'arbre de sortie 14 portant, sur une extrémité externe, une roue à chaîne 16 par laquelle il est relié par une chaîne 15 à la roue arrière 3.

La disposition qui précède ne diffère pas spécialement de celle d'un véhicule conventionnel. Conformément à la présente invention, un arbre moteur ou de transmission intermédiaire 18 est monté transversalement entre le vilebrequin 8 et l'arbre d'entrée 13 de la transmission 5 de sorte que la sortie du vilebrequin 8 peut être transmise par l'arbre de transmission intermédiaire 18 à l'arbre d'entrée 13 et, de plus, une génératrice à courant alternatif 19 et un dispositif de commande 20 pour le circuit d'allumage, par exemple un générateur d'impulsions ou un dispositif rupteur, sont montés sur les parties d'extrémité droite et gauche de l'arbre de transmission intermédiaire 18.

Dans ce cas, l'arbre de transmission 18 présente une longueur comparativement réduite de sorte que la longueur totale de celui-ci, y compris les éléments 19, 20 sur ses deux parties d'extrémité peut être inférieure à la longueur du vilebrequin 8. Le dispositif de commande 20 est constitué par un générateur d'impulsions dans le cas où le circuit d'allumage est du type sans contact et il est constitué par un dispositif rupteur dans le cas où le circuit est du type à contact.

Plus en détail, l'arbre moteur ou de transmission intermédiaire 18 comporte dans sa partie centrale une roue à chaîne 21 et la roue à chaine 21 est en engagement par une chaîne 22 avec une roue à chaîne 23 dans la partie centrale du vilebrequin 8. De plus, l'arbre moteur intermédiaire comporte, sur un de ses côtés, un pignon denté d'entraînement 24, ce pignon d'entraînement 24 engrenant avec un pignon d'entrée 25 sur une partie d'extrémité de l'arbre d'entrée 13 de sorte que, par rotation du vilebrequin 8, l'arbre moteur intermédiaire 18 et, de plus, l'arbre d'entrée 13 par l'intermédiaire de l'arbre 18, peuvent être entraînés en rotation avec le vilebrequin. Dans le mode de réalisation illustré, l'arbre moteur intermédiaire 18 est constitué par un arbre tubulaire et la génératrice 19 est reliée par un embrayage à friction 26 à une partie d'extrémité de celui-ci et un arbre 27 prolonge l'autre partie d'extrémité de l'arbre 8, le générateur d'impulsions qui constitue l'élément de commande 20 de l'allumage étant monté sur cet arbre 27.

La génératrice de courant alternatif 19 comporte de la manière connue un rotor et un stator et son rotor est solidaire de l'arbre de transmission intermédiaire 18. Ceci est également le cas pour le dispositif de commande 20 et son rotor est entraîné par l'arbre 27 depuis l'arbre de transmission 18. Dans le cas où l'élément 20 est un générateur d'impulsions comme mentionné précédemment, il est monté de manière que le signal sous forme d'impulsion qu'il engendre puisse être conduit à un élément de commutation dans le circuit d'allumage.

Le fonctionnement du dispositif ci-dessus sera expliqué ci-après:

Si le moteur 4 est en marche, le vilebrequin 8 est entraîné en rotation et, en combinaison avec celui-ci, l'arbre moteur intermédiaire 18 et par ce dernier l'arbre d'entrée 13 de la transmission 5 sont également entraînés rotation de sorte que la roue arrière 3 est entraînée par l'arbre de sortie 14 de la transmission 5, ce qui assure la propulsion de la motocyclette et, en même temps, la génératrice de courant alternatif 19 et le dispositif de commande 20 pour le circuit d'allumage sont entraînés en rotation par l'arbre de transmission 18 pour assurer le fonctionnement. En se référant aux dessins, la référence 28 désigne un réservoir à combustible placé au-dessus du moteur 4, la référence 29 le guidon à l'avant de celui-ci la référence 30 désigne le siège du pilote à l'arrière et la référence 31 désigne un pot d'échappement s'étendant vers l'arrière à partir du moteur 4.

De plus, conformément à la présente invention, et comme mentionné ci-dessus, l'arbre de transmission intermédiaire 18 est monté de manière à se trouver dans une position plus élevée que le vilebrequin 8 et le démarreur du moteur 33 engrenant avec la couronne de démarreur 32 sur l'arbre 18 est monté de manière à se trouver à l'arrière de l'arbre de transmission 18 et sensiblement au même niveau.

Plus en détail, le démarreur du moteur 33 est monté de manière à être positionné au-dessus de l'arbre de sortie 14 et son pignon de sortie 34 est en engrènement par un engrenage intermédiaire 35 avec la couronne de démarreur 32 sur l'arbre moteur intermédiaire 18 de sorte que le démarreur 33 peut, lorsque cela est nécessaire, entraîner le vilebrequin 8 par l'arbre moteur intermédiaire 18 pour assurer le démarrage du moteur 4. En conséquence, la génératrice de courant alternatif 19 et le dispositif de commande 20 pour le circuit d'allumage qui sont tous les deux des parties électriques et le moteur du démarreur 33 qui est également une partie électrique, se trouvent tous à une hauteur élevée au-dessus de la surface du sol et peuvent être protégés de l'eau de pluie ou similaire provenant de la surface du sol.

## Revendications

1. Un véhicule motorisé à deux roues du type dans lequel le cadre (1) du véhicule muni d'une roue avant (2) et d'une roue arrière (3) porte un moteur à combustion interne (4) placé à l'avant et une transmission (5) placée à l'arrière de manière que la puissance en sortie du moteur puisse être transmise à la roue arrière (3) par l'intermédiaire de la transmission, un arbre de transmission intermédiaire (18) étant monté transversalement entre l'arbre (8) du moteur s'étendant transversalement au moteur et un arbre d'entrée (13) s'étendant transversalement dans la partie frontale de la transmission de manière que la rotation de l'arbre (8) puisse être transmise par l'arbre de transmission intermédiaire (18) à l'arbre d'entrée (13), caractérisé en ce que l'arbre (8) du moteur est un vilebrequin, la génératrice de courant alternatif (19) et le dispositif de commande (20) pour le circuit d'allumage étant montés sur les deux parties d'extrémités de l'arbre de transmission intermédiaire (18) lequel a une longueur comparativement réduite de sorte que la longueur totale de l'ensemble y compris la génératrice de courant alternatif (19) et le dispositif de commande (20) pour le circuit d'allumage puissent se trouver logés dans la longueur totale du vilebrequin (8), l'arbre de transmission (18) étant en engagement par une roue dentée (21) se trouvant dans sa partie centrale avec une roue dentée (23) montée sur la partie milieu du vilebrequin (8) par l'intermédiaire d'une chaîne (22) et étant en engrènement par un pignon (24) monté sur sa partie d'extrémité avec un pignon d'entrée (25) monté sur la partie d'extrémité de l'arbre d'entrée (13) de la transmission.

2. Un véhicule motorisé à deux roues selon la revendication 1, caractérisé en ce que le dispositif de commande (20) de l'allumage est constitué par un générateur d'impulsions.

3. Un véhicule motorisé à deux roues selon la revendication 1, caractérisé en ce que le dispositif de commande (20) de l'allumage est constitué par un dispositif rupteur.

4. Un véhicule motorisé à deux roues selon l'une quelconque des revendications 1 à 3, caractérisé en ce que l'arbre de transmission (18) est monté de manière à être positionné à une plus grande hauteur que le vilebrequin (8) et en ce qu'à l'arrière de l'arbre de transmission et sensiblement au même niveau que celui-ci est monté le démarreur (33) du moteur connecté à la couronne de démarreur (32) montée sur l'arbre de transmission (18).

5. Un véhicule motorisé à deux roues selon la revendication 4, caractérisé en ce que le démarreur (33) du moteur est positionné au-dessus de l'arbre de sortie (14) de la transmission, son pignon de sortie (34) engrenant par un engrenage intermédiaire (35) avec la couronne de démarreur (32).

## Patentansprüche

1. Zweirädriges Motorfahrzeug, bei welchem der mit einem Vorderrad (2) und einem Hinterrad (3) ausgestattete Fahrzeugrahmen (1) eine vorne gelagerte Brennkraftmaschine (4) und ein hinten galagertes Getriebe (5) trägt derart, daß das Drehmoment auf der Abtriebsseite des Motors über das Getriebe (5) auf das Hinterrad (3) übertragbar ist, mit einer Zwischenwelle (18), welche in Querrichtung zwischen der Welle (8) des Motors angeordnet ist und sich in Querrichtung zum Motor erstreckt und einer Eingangswelle (13), welche sich stirnseitig des Getriebes (5) in Querrichtung erstreckt derart, daß die Drehbewegung der Welle (8) des Motors über die Zwischenwelle (18) auf die Eingangswelle (13) übertragbar ist, dadurch gekennzeichnet, daß die Welle (8) des Motors eine Kurbelwelle ist, daß der Wechselstrom-Erzeuger (19) und der Antrieb für den Zündstromkreis an den beiden äußeren Enden der Zwischenwelle (18) angeordnet sind, welche eine vergleichsweise geringe Länge aufweist derart, daß die Gesamtlänge der Anordnung einschließlich des Wechselstrom-Erzeugers (19) und der Antrieb (20) für den Zündstromkreis kleiner ist als die als Kurbelwelle ausgebildete Welle (8) des Motors, daß im mittleren Bereich der Zwischenwelle (18) ein Zahnrad (21) angeordnet ist, welches über eine Zahnkette (22) mit einem im mittleren Bereich der als Kurbelwelle ausgebildeten Welle (8) angeordneten Zahnrad (23) verbunden ist und daß am äußeren Ende der Zwischenwelle (18) ein Zahnrad (24) angeordnet ist, welches mit einem am äußeren Ende der Eingangswelle (13) angeordneten Zahnrad (25) in Eingriff steht.

2. Fahrzeug nach Anspruch 1, dadurch gekennzeichnet, daß der Antrieb (20) für den Zündstromkreis ein Impulsgenerator ist.

3. Fahrzeug nach Anspruch 1, dadurch gekennzeichnet, daß der Antrieb (20) für den Zündstromkreis ein Unterbrecher ist.

4. Fahrzeug nach einem der Ansprüche 1—3, dadurch gekennzeichnet, daß die Zwischenwelle (18) so angeordnet ist, daß sie höher als die als Kurbelwelle ausgebildete Welle (8) des Motors liegt und daß im hinteren Teil der Zwischenwelle (18) etwa auf gleicher Höhe derselben der Anlasser (33) des Motors angeordnet ist, welcher mit dem auf der Zwischenwelle (18) angeordneten Zahnkranz (32) des Anlassers verbunden ist.

5. Fahrzeug nach Anspruch 4, dadurch gekennzeichnet, daß der Anlasser (33) des Motors oberhalb der Abtriebswelle (14) des Getriebes liegt und daß das Zahnrad (34) auf der Abtriebsseite des Anlassers (33) über ein Zahnrad (35) in den Zahnkranz (32) des Anlassers (33) eingreift.

**Claims**

1. A motorized two-wheeled vehicle of the type in which the vehicle body frame (1) having a front wheel (2) a rear wheel (3) is provided with an internal combustion engine (4) in front and a transmission (5) in rear so that an output of the engine may be transmitted to the rear wheel (3) through the transmission, an intermediate driving shaft (8) being provided transversely between the engine shaft (8) extending transversely to the engine and a transversely extending input shaft (13) on the front portion of the transmission so that rotation of the shaft (8) may be transmitted through the intermediate driving shaft (18) to the input shaft (13), characterized in that the shaft (8) of the engine is a crankshaft; the A. C. generator (19) and a control member (20) for the ignition circuit being disposed on both end portions of the intermediate driving shaft (18) which is comparatively small in length so that the total length thereof including the A. C. generator (19) and the control member (20) for the ignition circuit may be within the whole length of the crankshaft (8), the driving shaft (8) being in engagement at a sprocket (21) on its middle portion with a sprocket (23) on a middle portion of the crankshaft (8) through a chain (22) and being in engagement at a gear (24) on its end portion with an input gear (25) on a end portion of the input shaft (13) of the transmission.

2. A motorized two-wheeled vehicle as claimed in claim 1, characterized in that the control member (20) of the ignition circuit comprises a pulse generator.

3. A motorized two-wheeled vehicle as claimed in claim 1, characterized in that the control member (20) of the ignition circuit comprises a contact breaker.

4. A motorized two-wheeled vehicle as claimed in any of claims 1 to 3, characterized in that the driving shaft (18) is so provided as to be positioned higher than the crankshaft (8) and in that in the rear of the driving shaft and at almost the same level therewith is mounted the engine starter (33) connected to a starter gear (32) on the driving shaft (18).

5. A motorized two-wheeled vehicle as claimed in claim 4, characterized in that the engine starter is positioned above the output shaft (14) of the transmission, the gear (34) on the output side thereof being in engagement through an intermediate gear (35) with the starter gear (32).

FIG. 1

FIG 2

# FIG 3

# FIG 4